# EUROPEAN PATENT SPECIFICATION

(11) **EP 1 152 331 B1**
(45) Date of publication and mention of the grant of the patent: **22.11.2017**
(21) Application number: 01106561.2
(22) Date of filing: 15.03.2001
(51) Int. Cl.: G06F 9/45, G06F 9/44, G06F 9/46, G06F 9/48

(54) **Parallel task processing system and method**
Paralleles Aufgabenverarbeitungssystem und -verfahren
Méthode et système de traitement parallèle de tâches

(30) Priority: 16.03.2000 US 190329 P
(43) Date of publication of application: 07.11.2001
(73) Proprietor: Kabushiki Kaisha Square Enix (also trading as Square Enix Co., Ltd.), Shinjuku-ku Tokyo 160-8430 (JP)
(72) Inventor: Kato, Toshiaki, Honolulu, HI 96821 (US)
(74) Representative: Grünecker Patent- und Rechtsanwälte PartG mbB

(56) References cited:
- EP-A- 0 357 444
- WO-A-99/30230
- US-A- 3 662 401
- US-A- 4 644 461
- US-A- 5 361 334
- US-A- 5 483 657
- YEE J J ET AL: "BIDDLE: a dataflow architecture for Lisp" SYSTEM SCIENCES, 1992. PROCEEDINGS OF THE TWENTY-FIFTH HAWAII INTERNATIONAL CONFERENCE ON KAUAI, HI, USA 7-10 JAN. 1992, LOS ALAMITOS, CA, USA,IEEE COMPUT. SOC, US, 7 January 1992 (1992-01-07), pages 611-618, XP010025811 ISBN: 0-8186-2420-5
- BADOUEL D ET AL: "DISTRIBUTING DATA AND CONTROL FOR RAY TRACING IN PARALLEL" IEEE COMPUTER GRAPHICS AND APPLICATIONS, IEEE INC. NEW YORK, US, vol. 14, no. 4, 1 July 1994 (1994-07-01), pages 69-77, XP000509481 ISSN: 0272-1716
- MOLNAR S ET AL: "A SORTING CLASSIFICATION OF PARALLEL RENDERING" IEEE COMPUTER GRAPHICS AND APPLICATIONS, IEEE INC. NEW YORK, US, vol. 14, no. 4, 1 July 1994 (1994-07-01), pages 23-32, XP000509477 ISSN: 0272-1716
- HUNT N ED - INSTITUTE OF ELECTRICAL AND ELECTRONICS ENGINEERS: "IDF: A graphical data flow programming language for image processing and computer vision" PROCEEDINGS OF THE INTERNATIONAL CONFERENCE ON SYSTEMS, MAN, AND CYBERNETICS. LOS ANGELES, NOV. 4 - 7, 1990, NEW YORK, IEEE, US, 4 November 1990 (1990-11-04), pages 351-360, XP010038015 ISBN: 0-87942-597-0

## Description

This patent application claims the priority of U.S. Provisional Application 60/190,329 filed on March 16, 2000, entitled "Parallel Object Task Engine and Method", by the same inventor.

This invention relates to the field of computer graphics and, in particular, to the use of am improved parallel processing method to obtain greater throughput in computer graphics rendering.

Computer graphics (CG) systems create display images frame-by-frame from digital data representing mathematically-described objects in a scene. CG systems have been noteworthy recently in creating computer-generated special effects, animated films, interactive 3D video games, and other interactive or 3D effects in digital media. They are widely used for entertainment and advertising, computer aided design, flight simulation and training, and many other applications.

With today's very realistic, detailed, 3D graphics movies, such as Pixar's *Toy Story* series, there are two problems often encountered with CG computer hardware and software. First, the amount of data required to generate the images have grown to the gigabyte-level, which means that the data may not fit on a single workstation. Current 32-bit microprocessors limit the size of addressable memory to 4 gigabytes, and further limitations are imposed by the operating system. Virtual memory does not help in this case, because the processor and/or the operating system simply cannot manage a larger memory.

Second, complex scenes require a huge amount of computational power to process the required rendering tasks. It is typical for a full feature film-level CG scene to require hours of computation to render a single frame of final image to be printed to film. When multiplied by a frame rate of 24 frames/sec. and 1 - 2 hours for a movie, the computation time required is tremendous. In order to handle the intensive computation required for realistic imagery, computer graphics practitioners have developed different approaches using parallel processing methods to achieve greater throughput in generating CG images. The problem has been in finding a parallel processing scheme that is efficient and, at the same time, accommodates the implementation of a wide range of advanced graphics functions. A continuing challenge for all parallel processing schemes is to allocate the many tasks of the overall processing work among the processors so that none are overloaded or excessively idle.

One basic approach to parallel processing is a technique known as pipelining, in which individual processors are, in effect, connected in an assembly-line configuration. Each processor performs a set of operations on one chunk of data, then passes that chunk along to another processor which performs a second set of operations, while at the same time the first processor performs the first set operations again on another chunk of data. However, pipelining is generally suitable only for simple processing sequences where the same tasks are performed on all chunks of data and take roughly the same amount of time for each of the processors.

Another parallel processing strategy proposed assigning one or more three-dimensional objects to each processor module, in which each processor module produces pixel data from the objects. The processor outputs must be pipelined so that pixel data from each processor are combined with pixel data from other processors where objects in a scene overlap or have different types of lighting or viewing effects on each other. A major problem with this approach is the potential inefficiency of having objects of widely varying pixel sizes (array numbers) or lighting effects distributed unevenly among the processors, such that some processors are idle while others have too many pixels or processing steps to perform.

Another approach has been to assign each processor to perform all processing steps for pixels in a predetermined region of the image screen, for example, as described in U.S. Patent 5,757,385, issued May 26, 1998 to Narayanaswami et al., assigned to IBM Corp., Armonk, N.Y. However, this approach imposes complex workload management programming requirements for allocating pixels and regions based upon the distribution of objects in the scene.

Yet another parallel processing strategy employed multiple whole-screen frame buffers matched to multiple processors, with each computing the whole screen but only a fraction of the total number of objects in the scene. The contributions to a pixel from each of the multiple screens are then combined. This simplifies the requirements for load balancing among processors by avoiding having to test each object for clipping and assignment to a given subregion of the scene. However, this approach creates a new problem in that each of the multiple whole-screen frame buffers for a single image requires substantial amounts of interprocessing to correctly form a composited image upon output.

Another approach, exemplified in U.S. Patent 5,719,598 issued February 17, 1998 to Latham, assigned to Loral Aerospace Corp., New York, N.Y., distributed polygon elements making up the objects in a scene among the processing modules. A scene data management processor selects and organizes the objects modeled with polygons and distributes the polygons to parallel geometry processing modules. The geometry processing modules convert the images from 3D to 2D screen coordinates and divide the polygons into constituent line elements or "spans". The spans are collected and sorted in order in a region buffer associated with each field of view. This approach also has the problems, discussed above, of potential inefficiencies in assigning polygons unevenly among the processors, and delays in pipelining the polygon outputs of the processors to a composited image based upon the most delayed processor.

The article BADOUEL D ET AL: "DISTRIBUTING DATA AND CONTROL FOR RAY TRACING IN PARALLEL",IEEE COMPUTER GRAPHICS AND APPLICATIONS, IEEE INC. NEW YORK, US, vol. 14, no. 4, 1 July 1994 (1994-07-01), pages 69-77 discloses a method for data-driven parallelization in the field of computer graphics.

One proposed solution specifically for CG scene rendering has been to use multiple CPUs running the rendering software in parallel, where the rendering tasks for a scene are broken up between the different CPUs so that each one renders some assigned part of the scene. This technique may be used whenever the scene data is too large to fit in a single processor. The scene is broken down into several layers, which may then be rendered by a renderer such as the RENDERMAN™ system of Pixar Animation Studios of Emeryville, CA. However, this approach does not account for different CPU loads for different layers. Further, the software does not know how to divide a scene across the different CPUs, so human effort is required to do this job. The rendered images also require an additional step of compositing together the images generated by the different CPUs. This may or may not be automated, depending on the complexity of the scene. Also, this approach does not allow for effects such as correct shadow casting and reflection across different objects, since the individual CPUs do not know about the CG data being rendered on the other processors.

A recent development employed by Square USA, Inc., based in Los Angeles, California, and Honolulu, Hawaii, is to have a group of processors that divide the scene data across different processors, and at the same time know about the data that other processors have, so that necessary data can be queried at any time. Square USA's in-house renderer takes this "data-parallel" approach to handle the large data size of CG scenes. The scene data are distributed among the different processors, and the processors communicate via message passing when one processor needs some computation performed by another processor.

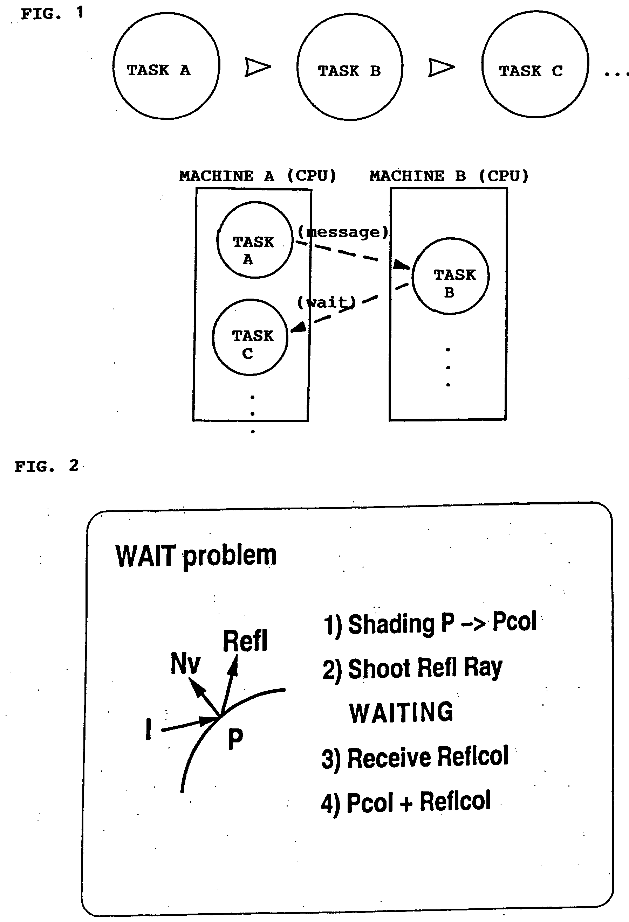

Generally, two problems occur in distributed processing systems using message passing. Referring to FIG. 1, a typical parallel processing system employs a set of processing machines or CPU processors (Machine A, Machine B, etc.) to which different processing tasks (Task A, Task B, Task C, etc.) are assigned in order to perform them in parallel. In this example, Machine A performs a processing task on Task A, and Machine B performs a processing task on Task B. However, if Task A requires data input from another source, such as from Task B, to complete its task, then it sends a message to Task B and awaits its input. Task A in many cases cannot go on to further processing until it gets a reply from Task B. It is normal for many such situations to occur within a distributed processing system. In such a case, Task A will remain in a wait state and cannot go on to a next assigned Task C until the reply from Task B comes back. Thus, Machine A on which Task A is running will be used simply for waiting, thereby wasting a valuable CPU resource. Further, when executing large amounts of independent processing in parallel, the task management for each of the many processing tasks and assignments to the multiple processors, taking into account the independence and parallelism of each process, requires a huge development cost and experience on the part of the programmer, and is not a trivial task.

Accordingly, it is a principal object of the present invention to provide a parallel processing system and method that can effectively parallelize the processing of computer graphics shading tasks in a parallel
processing environment. A more specific object of the invention is to greatly reduce the amount of wasted time of a processor waiting for a return message from other tasks being processed in a parallel processing environment of the message-passing type for computer graphics shading tasks. It is also a particular desired object to significantly improve the throughput of CG scene rendering by devising a way for the sequence of rendering tasks to be performed in parallel by minimizing the waiting time between tasks

This is achieved by the features of claim 1. Further features and advantages of the present invention are set forth in dependent claims.

In an implementation of the invention, a rendering task for an image frame of a scene includes a master task grouping of shading task spaces for shading points of an object intersected by an eye ray in the image frame. Each shading task space includes a plurality of "point shading" task objects for performing shading of a point based upon light sources in the scene, and a "compositing" task object for compositing the shading results for the point. Each shading task object has at least one "data-waiting" slot for return of data characterizing light emitted from a respective light source in the scene. All shading task objects in the active state from any of the shading task spaces of the shading task grouping are placed on a queue and each is assigned in turn to a next available "unoccupied" processor of the CG processor array.

Other objects, features, and advantages of the present invention will be described in further detail below, with reference to the following drawings:
**FIG. 1** is a schematic illustration of the problem of waste of waiting time in parallel processing of tasks on parallel processors.
**FIG. 2** is an illustration of the wait problem in a shading task for the rendering of a computer graphics image.
**FIG. 3** is an illustration of a parallel processing environment of the message passing type on which the present invention is based.
**FIG. 4** is an illustration of the data flow in a typical computer graphics rendering application.
**FIG. 5** is an illustration of task control in parallel processing of a processing application.
**FIG. 6** is an illustration of the message passing layer in parallel processing of a processing application.
**FIG. 7** is an illustration of the data flow in a typical shading task of a computer graphics rendering application.
**FIG. 8** is an illustration of a master task engine for a plurality of defined shading task spaces each containing a plurality of defined shading task objects.
**FIG. 9** is an illustration of a shading task space as defined by a shading request in an overall CG rendering task.
**FIG. 10** is an illustration of solving the waiting problem in shading task execution by defining inactive and active states for shading task objects in the shading task.
**FIG.11** is an illustration of the basic elements of a shading task object.
**FIG. 12** is an illustration of the "waiting", "active", and "dead" states of a shading task object.
**FIG. 13** is an illustration of sending data between task objects in different shading tasks.
**FIG. 14** is an illustration of shader task objects of a Shading POT Space in a CG rendering application.

A preferred implementation of the parallel processing method and system of the present invention is described in detail below using the example of computer graphics rendering performed in a parallel processing environment of the message passing type.

In the example described in detail below, a computer graphics rendering application is performed in a UNIX™ programming environment. For example, the CG rendering application may be performed on SGI™ workstations running IRIX™ operating systems, as are available commercially from Silicon Graphics Inc., of Mountain View, CA, or even on standard IBM PC-compatible computers running the LINUX™ operating system.

A CG development platform is used to create an overall CG media program and accompanying database of scenes and objects, such as the MAYA™ development platform offered by Alias Wavefront, Inc., of Toronto, Ontario, Canada, which is a subsidiary of Silicon Graphics, Inc. The MAYA™ development platform is a 3D modeling, animation, and rendering software package that has advanced interface, workflow, flexibility, and depth features. MAYA includes many tools used for modeling and animation, including setting keyframes and constraints, inverse kinematics, attaching surfaces to skeletons, character modeling, nurbs modeling, character expressions, particle and dynamics suites for rigid and soft bodies, texturing, and tools for rendering including node-based shaders, anti-aliasing, motion blur, and selective raytracing/raycasting. At the heart of MAYA is MEL, its scripting language. It is, therefore, possible to create new tools, combinations of tools, completely modify the interface, and tie MAYA in with other software programs using MEL. The parallel processing system of the invention can be implemented using the MEL scripting language, or by implementing a 'hook' in MEL which will invoke external programs written in other programming languages, such as C++.

The developed CG media program and data files, referred to as "SHOT" data files, can then be rendered into a visual display of the CG media program. The rendering process operates on a "World Task" which invokes many different rendering tasks. The many rendering tasks include many independent operations which lend themselves to efficiencies obtained by parallel processing using multiple CPUs. However, as described above with respect to **FIG. 1****,** the previous approaches to parallel processing have resulted in many instances of waiting time wastage which can obviate the advantages of parallel processing.

For a typical shading task of the rendering process, as illustrated in **FIG. 2****,** shading requires computing the surface color of point P, a point on a reflective surface in the scene, as seen by the viewpoint I. The surface color of point P will have two parts. First, the color information Pcol can be computed from the object surface's information itself, mainly the surface characteristic and the color properties of the object, and the lighting information of the lights which hit affect the point. Because point P is a point on a reflective surface, a secondary computation needs to be performed as well. In this case, the reflection vector must be computed relative to the surface normal Nv, then perform a space traversal, then calculate if the reflection vector hits some other object in the scene space. The space traversal computation is typically handled by a separate task. The shading task must send a request to a separate, reflected color computation task in the form of a message for the computed Reflcol, and the space traversal task must also be computed to determine which object the reflection vector will hit separately. The information is retrieved as the processed output of another shading request, and the color of the reflection vector's target must be determined. The computed reflected color information will be sent back to the shading task which initially computed the reflection vector, and once the Reflcol information is received, the initial shading task can complete its computation of Pcol + Reflcol, and then will be able to go on to the next step in the shading process. In this manner, many situations will arise in the shading computation for a single point on a surface needs to call other functions within separate processes, and wait for the result. If the shading process were to wait for the return value every time this occurs, the message passing overhead will pile up until the value of the system's parallelism is completely lost.

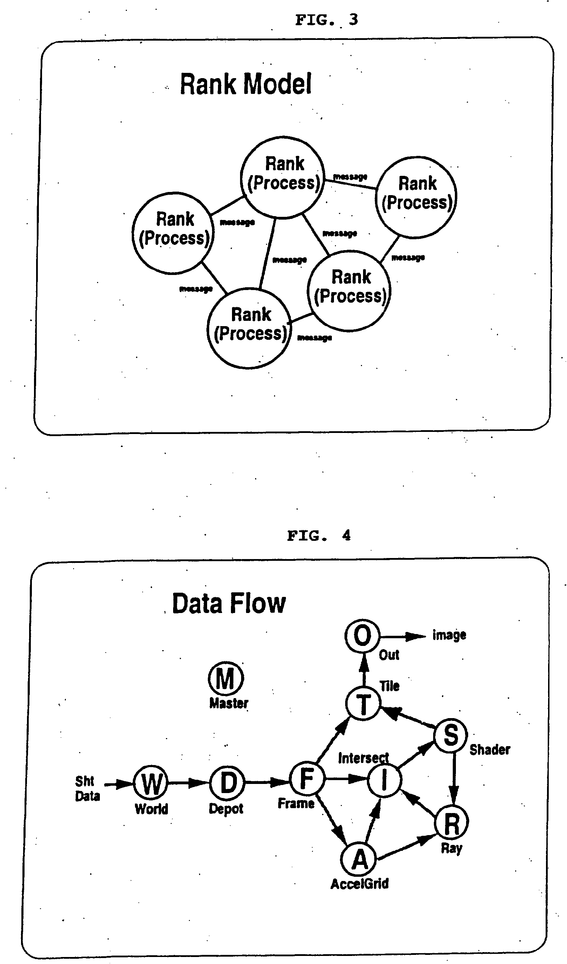

Referring to **FIG. 3****,** the rendering tasks are conventionally grouped together into processes which have a common mode and can proceed according to a described order or "Rank". The Rank processes communicate among each other by message passing. If processing is halted in each Rank process awaiting results to be returned by another Rank process, the advantages of using parallel processing for the rendering tasks can be easily lost.

In **FIG. 4****,** the data flow for a typical shading task of a rendering process is illustrated. The rendering process is referred to as the Master process M. The Master process M executes a World Task W, based upon "Shot data" representing the scene and objects in the scene as developed for the CG media program, i.e., movie or video game. The required data and program sequence are held in a data Depot D and accessed for rendering each image Frame F. Each Frame F is rendered by rendering the viewer's eye view of objects in the scene. The viewer's eye view is represented by an array of eye rays computed by the AccelGrid function A, and the intersections of the eye rays with 3D objects in the scene are computed by the Intersect function I. For each point of an object intersected by an eye ray, the Shader function S is invoked. The Shader function takes into account the surface characteristics of the object to generate one or more Raytracer process(es) R from light sources in the scene. The light sources may be, for example, emitted, reflected, ambient, and/or diffused light in the scene. When light data has been returned by the Raytracer process(es), the Shader function S can compute the shading of the point. When the points of an object have been shaded, the Tile process T is invoke to composite the shaded objects together into an Output O and displayed as the frame image.

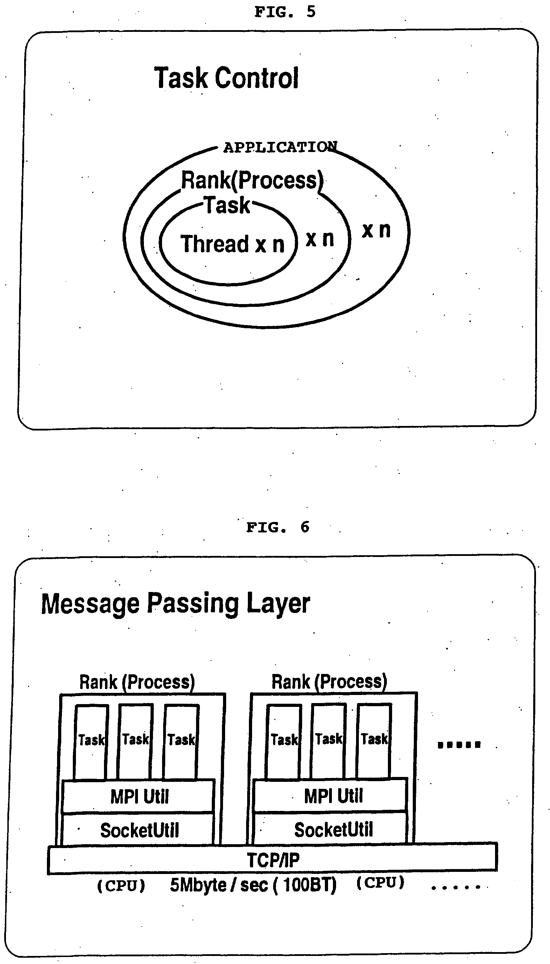

As illustrated in **FIG. 5****,** the task control of the Master rendering process can be visualized as depth nesting of many Rank processes, each encompassing many Rendering Tasks, each encompassing many Threads of computation. The message passing interface between Rank processes and Tasks is illustrated in **FIG. 6****.** A Message Passing Interface (MPI) utility is operative to pass messages from the Tasks to a Socket Utility operative with each defined Rank process. The Socket Utility enables the messages to be transmitted on a data bus or network (indicated as TCP/IP) which connects the Rank processes to an array of parallel processors (CPUs).

In the present invention, a parallel object task (POT) Engine is created to handle the parallel processing of rendering tasks. The POT Engine is implemented as a C++ class library, making it possible for programmers to develop the parallel message passing system more securely and easily, writing each operation in accordance with the POT Engine's design. The POT Engine can be considered to be a very large waiting queue of tasks which are to be executed in parallel as independent operations.

The POT Engine includes one or more POT Master task groupings which in general are groupings of tasks according to a chosen task control methodology. For the example of a POT Engine for the rendering process, the shading task, which is accomplished by a parallel ray tracer using message passing, is implemented in a POT Master task grouping as a plurality of Shading POT (or SPOT) Spaces.

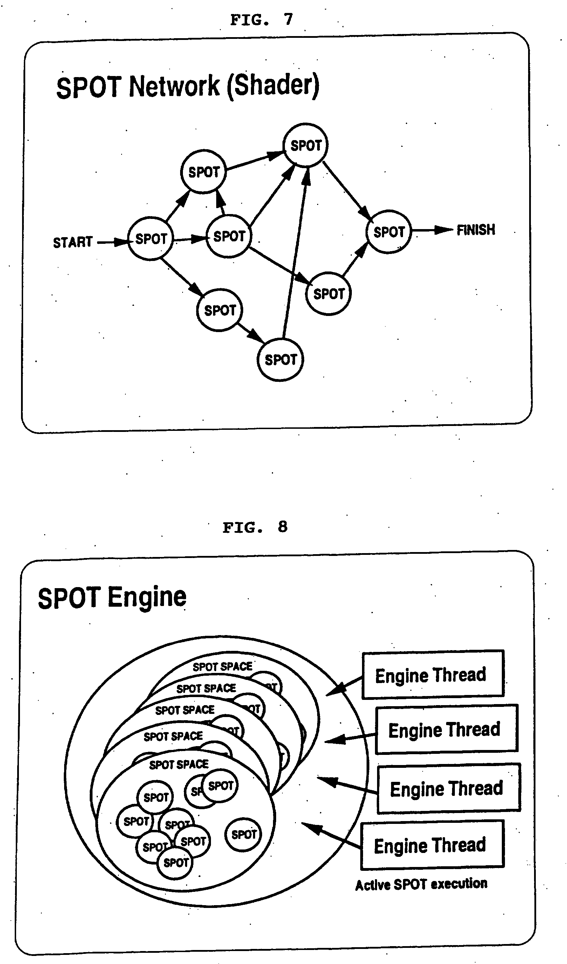

Referring to **FIG. 7****,** each SPOT Space can be a network of elemental shading tasks, with some elemental shading tasks requiring data from other elemental shading tasks before they can finish. Each elemental shading task is referred to as a "SPOT Object", and is defined as a processing task which is self-contained, requires a data input from another SPOT Object or external process, and, once the data input becomes available, can be executed in one computational step without having to wait for data in order to complete its task. The SPOT Space can be visualized as a network of SPOT Objects which proceeds from a START point through the SPOT Objects as they pass the results of their individual computations on to the next SPOT Objects until the task of the SPOT Space reaches a FINISH.

In **FIG. 8****,** a SPOT Engine can be visualized as comprising a large number of Engine Threads used to monitor the processing of SPOT Objects in a plurality of SPOT Spaces in a POT Master. Each POT Engine Thread seeks out POT Objects in an active state in a POT Space, and assigns them for processing. Each POT Master may start up multiple POT Engine Threads. An active POT Object is executed by one and only one POT Engine Thread, and multiple POT Engine Threads will never execute the same POT Object simultaneously. As each POT Object becomes ready to be processed, referred to herein as the "active" state, it is placed in a queue to be assigned to a next available processor. The assigned processor can then perform the computation required for the POT Object without having to wait for any data to be passed from another object, task or process. When the computation is completed, the results are passed to the next POT Object as designated by the Engine Thread that needs the results for its computation, and the now available processor is assigned another active POT Object on the queue. POT Masters with multiple POT Engine Threads can be expected to execute multiple POT Objects efficiently in parallel, and thus increases the parallel execution efficiency in a machine with multiple CPUs.

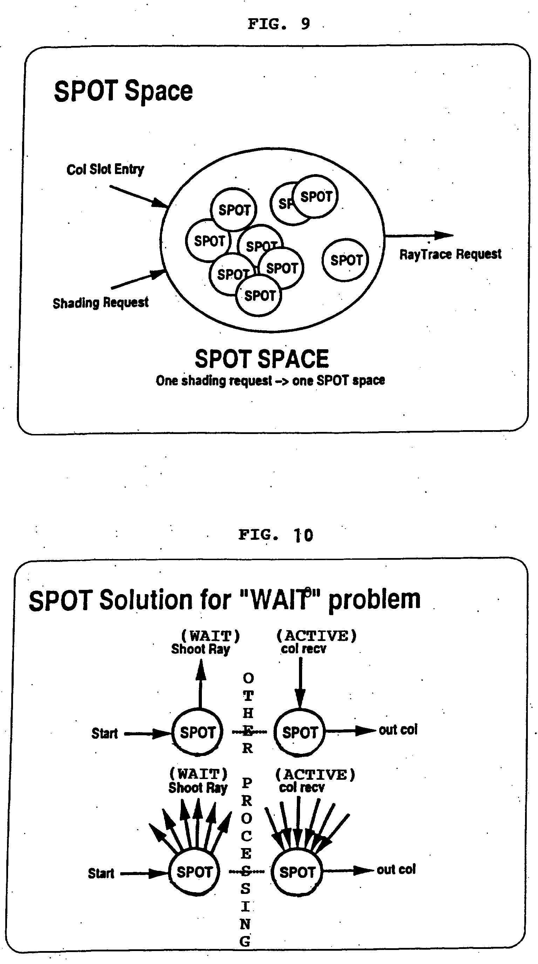

Referring to **FIG. 9****,** a SPOT Space for a shading task can be visualized as initiated by receipt of a Shading Request. The Shading Request can initiate a number of Shading SPOT Objects for the different points in the 3D scene to be shaded. The Shading SPOT Objects issue a plurality of RayTrace requests for the different light elements in the scene contributing to the lighting of the point. The Shading SPOT Objects also have a slot awaiting color data Col for each RayTrace request it issues. When all the RayTrace data are returned in the slots, the Shading SPOT Objects can complete their computational tasks.

In **FIG. 10****,** the solution in the present invention to the "wait" problem of tying up parallel processing resources is illustrated. When a SPOT Object sends a RayTrace request and is waiting for data, it is placed in a "wait" state, and processing resources will not be allocated to it. In some cases, multiple RayTrace requests may be sent by a SPOT Object requiring multiple data inputs to be returned. When all the data becomes available, the status of the SPOT Object is changed to "active" and placed on the queue to be processed by the next available processing resource. In this manner, the parallel processing resources are more or less continuously occupied and are not wasted by waiting for data. The processors need not wait for an entire SPOT Space to be completed before it is assigned a new SPOT Object.

In implementing a shading task, each point of a surface's shader computation is implemented as a SPOT Space, and each SPOT Space may require multiple SPOT Objects to compute each of the respective RayTracing requests for that pixel. The parallel processing resources are continuously occupied with executing the many SPOT Objects of the SPOT Spaces that are in the active state, and not waiting for a SPOT Space to finish its computation. In this manner, multiple shading computation objects can be executed in parallel. Therefore, by implementing shading with the POT Engine, the message transmission latency inherent in message passing systems is negated, and parallel processing efficiency is increased.

### Programming Considerations

From a programming perspective for the tasks of a parallel processing application in general, a POT Master contains all the functionality and data for a single POT Engine. Basically, all the functionality required for mangaging the POT Engine is implemented within the POT Master, and programmers can program without thinking about its internal workings at all. It is possible for multiple POT Masters to exist within a single program. However, each POT Master is designed to operate independently of others, and its internal data (POT Spaces, POT Objects) may not directly access other tasks or processes than that of the POT Master they belong to. Multiple POT Spaces can exist within a POT Master, and each POT Space contains multiple POT Objects that can be executed in parallel. A POT Space's internal data (POT Objects) may not access other POT Spaces than the one they belong to. A POT Space defines a single closed process, and if multiple such processes are required, multiple POT Spaces can be created within the POT Engine to accommodate that.

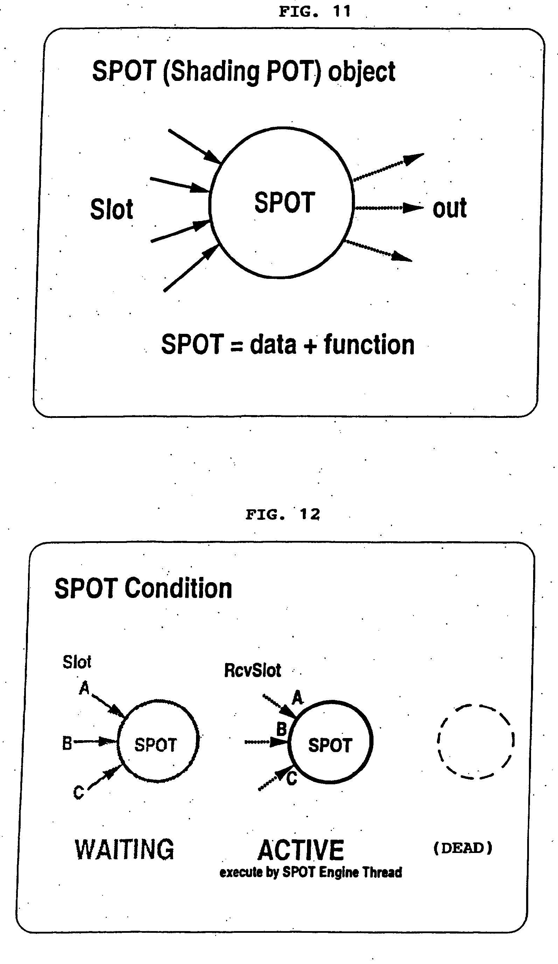

Referring to **FIG. 11****,** a POT Object is the smallest unit for program execution. The POT Master, which manages the queue for the POT Objects, will assign the complete execution of a POT Object to a processor before the processor can be assigned to the next POT Object. Each POT Object contains one or more "slots" for receipt of data from an external source. The data received by a slot can also spcify a function to be performed by the POT Object. Also, it is possible for a POT Object to contain variables for internal use. Therefore a POT Object is an object in an object-oriented programming sense, and is implemented as a C++ class. Programmers can code the desired operations and data into the POT Object, as well as define input slots for receiving data from external sources, by extending the basic POT Object.

As illustrated in **FIG. 12****,** a POT Object whose slot has been defined but currently has no data set in the slot is said to be in the "waiting" state. A POT Object in this state will not be assigned to a processor nor be executed. Only after data values are set in all the defined slots will the status of the POT Object be changed to active state, signifying that it is ready for execution. POT Objects within the same POT Space may write to each other's data slots by specifying the POT Space Address (PSA) of the target POT Object. The PSA is defined as a data structure containing 1) the physical address of the POT Object, as assigned by the standard C++ "new" operator, 2) the rank id of the POT Object, which specifies the type of the computation being performed, and 3) The slot ID the data will be stored in. When the processing of a POT Object is completed, the status of the POT Object is changed to the "dead" state. The POT Master will periodically delete dead POT Objects from memory at certain intervals. A POT Object may also have a "static" state in which it will never be executed, and is used for referencing its internal data from or to other POT Objects.

To implement a POT Object, a programmer only needs to specify when a POT Object is in any of the four states and allow for the creation of its "data-waiting" slot address(es), and the flow of data from one POT Object to another. The POT Engine will execute all POT Objects in an active state. Having multiple POT Objects in an active state implies that such POT Objects have no dependencies on each other and that they can be executed in parallel. If a POT Object is waiting for input from an external source, then this is equivalent to the state of waiting for a process awaiting results from other functions commonly found in conventional message-passing-based parallel processing systems, except that the waiting POT Object is not in active execution and does not tie up a processor resource. Therefore, the CPU can be busy executing the many other POT Objects that probably exist at the same time.

The programming of a POT Engine requires that a programmer first identify those areas of a large rendering task that can be grouped together as POT Spaces that do not require message passing from an external process in order to complete a POT Space computation, and then breaking up elemental tasks as POT Objects within a POT Space that are self-contained and can be executed in one computational step without requiring message passing to or from another object. Thus, a POT Object is generally characterized by a self-contained programmed sequence within an overall complex programmed application which has as its starting point the input of data being awaited, an uninterrupted computational step, and an output of the computational step on the input data.

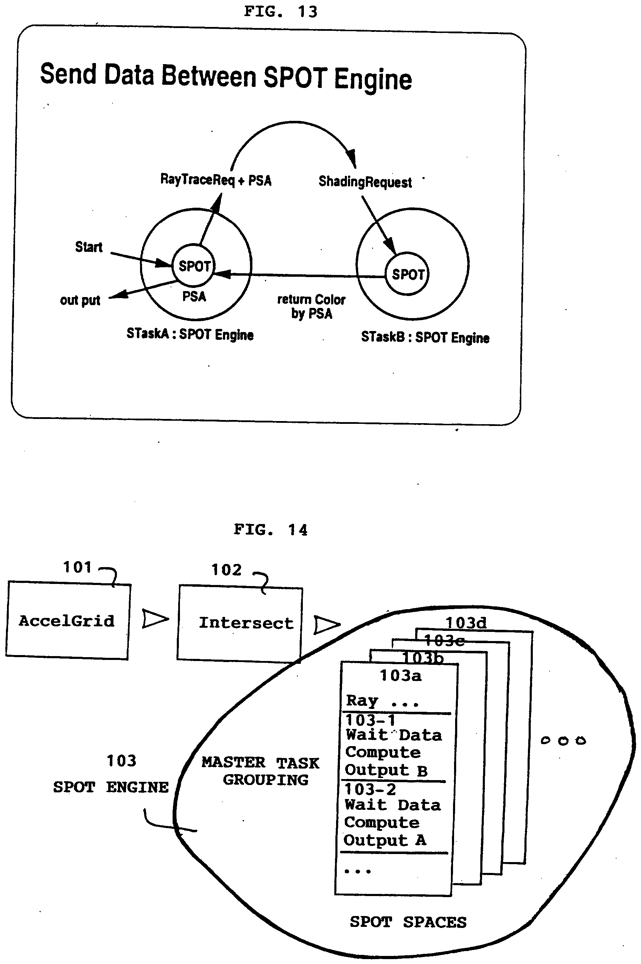

In **FIG. 14****,** an example is shown of two shader POT Objects defined within one of many shading tasks of a shading operation in a CG rendering application. The shading operation is initiated during a CG rendering application after an image frame of a scene has been defined, and the World Map data of the scene and objects therein ("Shot Data") are retrieved and held in a Depot to be used for shading of objects as they appear in the image frame (see **FIG. 4**). In Block 101, the AccelGrid function is called to narrow down the areas of the scene which will be scanned for intersecting objects. In Block 102, the Intersect function is called to find a point in the 3D scene that is intersected by traversal of eye rays from the viewer through the screen to the object in the 3D scene. When an intersecting point is found, the rendering program calls the shading function to derive the light and color with which the point will be shaded, based upon the light sources that impact the point in the scene. The shading function starts by determining the surface texture and characteristic of the point and generating a Shading POT (SPOT) Engine 103 for parallel processing of "ray-shooting" requests for light/color data from each light source. Each "ray-shooting" request can form a single Shading POT (SPOT) Space 103a of many such spaces 103b, 103c, 103d, ....

Within each SPOT Space, there may be one or more SPOT Objects in which a message is passed to another process for return of data. In the example shown, one source of light on a point being shaded is from a point A, which in turn is illuminated by a nearby light source B. Thus, defined within SPOT Space 103a is a SPOT Object 103-1 which awaits data representing light source B and computes the light reflected from reflection surface A, and a SPOT Object 103-2 which awaits the result of computation of reflected light from SPOT Object 103-1 and computes the light and color values to be applied to the pixel representing that point on the object. In this manner, SPOT Objects are defined in each of the SPOT Spaces, and the SPOT Objects are processed by the SPOT Engine using the above-described method of prarallel processing.

For standard shading tasks in CG rendering, templates representing different light shading models can be stored in a library for use by the programmer to easily program the SPOT Spaces and SPOT Objects. An example of the use of a shading template to implement a SPOT Engine for a shading task is provided in Appendix A hereto.

Because all the processing within a POT Engine is encoded in terms of POT Objects and POT Spaces, it requires significantly more memory than an ordinary sequential program. In order to conserve memory as much as possible, POT Objects which are no longer needed, i.e., dead objects, are quickly deleted from the POT Engine. This operation is programmed to be performed by the POT Engine automatically, so programmers do not need to concern themselves with explicitly freeing memory.

Under normal programming, when the POT Engine is used for some logic, each of POT Object, POT Space, and POT Master classes are inherited by new classes, and the necessary new data and functions are added. For example, the SPOT Engine class is created implementing the necessary data and functions for the shading engine, which apply to the SPOT Space and SPOT Master classes as well. For example, a new raytracing request that is required for shading is passed to other processes as a RayTracingRequest message, but this part is handled completely by the SPOT Master.

A POT Engine may commonly need to be accessed from within another separate process. A POT Engine can send data to another POT Engine by maintaining a POT Space Address (PSA) listing. In a conventional sequential program, the program is executed within a single memory address space, so data access can easily be performed in the form of pointers. However, in the kinds of parallel processing using multiple processes that the POT Engine is expected to run under, such global addresses do not exist. Therefore, in order to set some data into a POT Engine that exists in a different process, the PSA listing method is used for specifying addresses within the POT Engine so that they can be accessed from within a different process. The PSA is a unique address ID defined only within that POT Engine itself, so by using that address indexed to a specific POT Engine, access to the correct memory space address can be performed in a safe manner. This is illustrated in **FIG. 13****,** in which the SPOT Engine for Shader Task A sends a RayTrace request and PSA address for return of data to the SPOT Engine for Shader Task B, which can then return a color result to the indicated PSA and SPOT Engine.

In order to use the POT Engine, programmers will be inheriting from the POT class as necessary. Therefore, it is difficult to determine the data size of the POT Objects which exists within the POT Engine until runtime. Because of its architecture, the POT Engine allocates a large number of POT Objects internally which changes dynamically. This requires a dynamic allocation of memory, and in actual use, the system will have to handle a large number of POT Objects of differing sizes. Therefore, having a fast, efficient memory management is an extremely important issue. Therefore, the POT Engine is designed to contain its own memory management functionality, which realizes a faster performance than the default memory management implemented in the operating system. This memory management system is built to be thread-safe, in order to be able to deal with parallel processing correctly.

Analysis of the POT Engine operation is often necessary for analyzing the overall system performance. By analyzing how often and how fast a POT Object is being created and processed, it is possible to determine where bottlenecks occur in the system and what kinds of improvements will be effective. For this purpose, a POT Engine can be designed to profile its own execution and log its performance. It is possible to dump such data in real-time or check the performance at the end, which allows the system to monitor the rate at which the tasks are being performed. This feature is effective for tuning the overall performance of the system.

## Claims

1. A parallel processing method for performing computer graphics shading tasks in parallel on a plurality of processors, comprising the steps of
(a) identifying at least one group of elemental shading tasks of a large computer graphics rendering task for shading an image frame of a scene that can be grouped together, as a shading task space (103a, 103b, 103c, 103d) that performs shading of a pixel in the image frame such that the shading task space is not dependent on message passing from an external process in order to complete processing of computational processes of the shading task space (103a, 103b, 103c, 103d);
(b) breaking down the shading task space (103a, 103b, 103c, 103d) into a plurality of self-contained shading task objects (103-1, 103-2) the shading task objects (103-1, 103-2) including a plurality of "pixel shading" task objects for performing shading of the pixel based upon ray shooting from light sources in the scene, and a "compositing" task object for compositing the shading results for the pixel such that each of the shading task objects can be executed in one computational step without requiring message passing to or from another object, wherein each shading task object (103-1, 103-2) is defined with a computational step and at least one "data-waiting" slot for receipt of data requested from another shading task object to which the shading task object (103-1, 103-2) passes a message for the requested data, and wherein once all the "data-waiting" slots of a shading task object are filled by respective return message(s), the shading task object (103-1, 103-2) can perform its defined computational step without waiting for any other input;
(c) scheduling the defined shading task objects (103-1, 103-2) of said identified shading task space (103a, 103b, 103c, 103d) so that each shading task object (103-1, 103-2) ready for processing is processed by a next available "unoccupied" one of the plurality of processors, by the sequence of
(i) placing a shading task object (103-1, 103-2) with an unfilled "data-waiting" slot in a "waiting" state in which it is not assigned to any processor;
(ii) changing the status of a shading task object (103-1, 103-2) to an "active" state when all of its defined "data-waiting" slots have been filled, wherein it is assigned to a next available processor in an "unoccupied" state, then placing that processor's status in an "occupied" state; and
(iii) changing the status of the shading task object (103-1, 103-2) to a "dead" state when the computational step to be performed for the shading task object (103-1, 103-2) by the assigned processor has been completed, and then changing the processor's status to an "unoccupied" state to be assigned to a next "active" shading task object (103-1, 103-2).

2. A parallel processing method according to claim 1, wherein a master shading task grouping is defined by a plurality of shading task spaces (103a, 103b, 103c, 103d) each of which contains multiple shading task objects (103-1, 103-2) and does not require message passing from an external source in order to complete computation for the respective shading task space (103a, 103b, 103c, 103d).

3. A parallel processing method according to claim 2, wherein all shading task objects (103-1, 103-2) of the shading task spaces which are in an "active" state are placed in a processing queue and each is assigned in turn to a next available "unoccupied" processor.

4. A parallel processing method according to claim 3, wherein a master engine (103) for the master shading task grouping maintains threads which track the processing of shading task objects (103-1, 103-2) in each of the shading task spaces (103a, 103b, 103c, 103d).

5. A parallel processing method according to claim 4, wherein the master engine (103) for the master shading task grouping maintains an internal space address assigned to each respective shading task object (103-1, 103-2).

6. A parallel processing method according to claim 5, wherein a shading task object (103-1, 103-2) in one master shading task grouping can exchange data with a shading task object in another master shading task grouping by providing its internal space address indexed to its master shading task grouping.

7. A parallel processing method according to any of claims 1 to 6, wherein each shading task object (103-1, 103-2) has at least one "data-waiting" slot for return of data characterizing light emitted from a respective light source in the scene.

8. A parallel processing method according to any of claims 1 to 7, wherein the rendering task includes a function for receiving scene data for a "world map" of the scene, a function for defining the scene objects in each frame of the scene, a function for defining the pixels of an object in the scene intersected by an eye ray of a viewer of the scene, and a function for tiling together the shading results returned by each of the master shading task groupings for respective objects in the image frame.

## Patentansprüche

1. Parallelverarbeitungsverfahren zum parallelen Ausführen von Schattierungsaufgaben in der Computergrafik auf einer Mehrzahl von Prozessoren,
umfassend die Schritte
(a) Identifizieren wenigstens einer Gruppe von elementaren Schattierungsaufgaben einer großen computergrafischen Bildaufbereitungsaufgabe zum Schattieren eines Einzelbildes (Original: image frame) einer Szene, die zusammengruppiert werden können, als ein Schattierungsaufgabenraum (103a, 103b, 103c, 103d), der Schattierung eines Pixels in dem Einzelbild ausführt, so, dass der Schattierungsaufgabenraum nicht vom Meldungsweiterleiten von einem externen Prozess abhängt, um das Ausführen von Rechenprozessen des Schattierungsaufgabenraums (103a, 103b, 103c, 103d) zu vollenden;
(b) Herunterbrechen des Schattierungsaufgabenraums (103a, 103b, 103c, 103d) in eine Mehrzahl eigenständiger Schattierungsaufgabenobjekte (103-1, 103-2), wobei die Schattierungsaufgabenobjekte (103-1, 103-2) eine Mehrzahl von "Pixelschattierungs"-Aufgabenobjekten für das Ausführen von Schattierung des Pixels basierend auf der Strahlenaussendung (Original: ray shooting) von Lichtquellen in der Szene und ein "Zusammensetzungs"-Aufgabenobjekt für das Zusammensetzen der Schattierungsergebnisse für das Pixel, so dass jedes der Schattierungsaufgabenobjekte in einem Rechenschritt ausgeführt werden kann, ohne Meldungsweiterleiten zu oder von einem anderen Objekt zu erfordern, enthalten, wobei jedes Schattierungsaufgabenobjekt (103-1, 103-2) mit einem Rechenschritt und wenigstens einem "Datenwarten"-Slot für das Empfangen von angeforderten Daten von einem anderen Schattierungsaufgabenobjekt, zu dem das Schattierungsaufgabenobjekt (103-1, 103-2) eine Meldung für die angeforderten Daten weitergeleitet hat, definiert ist, und wobei, sobald alle "Datenwarten"-Slots eines Schattierungsaufgabenobjekts mit entsprechender/n Rückmeldung(en) gefüllt sind, das Schattierungsaufgabenobjekt (103-1, 103-2) seinen definierten Rechenschritt ausführen kann, ohne auf weitere Eingaben zu warten;
(c) Planen der definierten Schattierungsaufgabenobjekte (103-1, 103-2) des identifizierten Schattierungsaufgabenraums (103a, 103b, 103c, 103d), so dass jedes Schattierungsaufgabenobjekt (103-1, 103-2), welches für die Verarbeitung bereit ist, durch einen nächsten verfügbaren "unbesetzten" der Mehrzahl von Prozessoren verarbeitet wird, durch die Folge von
(i) Platzieren eines Schattierungsaufgabenobjekts (103-1, 103-2) mit einem nicht gefüllten "Datenwarten"-Slot in einen "Warten"-Zustand, in dem es keinem Prozessor zugewiesen ist;
(ii) Ändern des Status eines Schattierungsaufgabenobjekts (103-1, 103-2) in einen "aktiven" Zustand, wenn alle seiner definierten "Datenwarten"-Slots gefüllt wurden, wobei es einem nächsten verfügbaren Prozessor in einem "unbesetzten" Zustand zugewiesen wird, dann Platzieren des Status dieses Prozessors in einen "besetzten" Zustand; und
(iii) Ändern des Status des Schattierungsaufgabenobjekts (103-1, 103-2) in einen "toten" Zustand, wenn der für das Schattierungsaufgabenobjekt (103-1, 103-2) durch den zugewiesenen Prozessor auszuführende Rechenschritt vollendet wurde, und dann Ändern des Status des Prozessors in einen "unbesetzten" Zustand, um einem nächsten "aktiven" Schattierungsaufgabenobjekt (103-1, 103-2) zugewiesen zu werden.

2. Parallelverarbeitungsverfahren nach Anspruch 1, wobei eine Master-Schattierungsaufgabengruppierung durch eine Mehrzahl von Schattierungsaufgabenräumen (103a, 103b, 103c, 103d) definiert ist, deren jeder mehrere Schattierungsaufgabenobjekte (103-1, 103-2) enthält und kein Meldungsweiterleiten von einer externen Quelle erfordert, um die Berechnung für den jeweiligen Schattierungsaufgabenraum (103a, 103b, 103c, 103d) zu vollenden.

3. Parallelverarbeitungsverfahren nach Anspruch 2, wobei alle Schattierungsaufgabenobjekte (103-1, 103-2) der Schattierungsaufgabenräume, die in einem "aktiven" Zustand sind, in einer Verarbeitungsschlange platziert werden und jedes der Reihe nach einem nächsten verfügbaren "unbesetzten" Prozessor zugewiesen wird.

4. Parallelverarbeitungsverfahren nach Anspruch 3, wobei ein Master-Engine (103) für die Master-Schattierungsaufgabengruppierung Teilprozesse (Original: threads) unterhält (Original: maintains), die die Verarbeitung von Schattierungsaufgabenobjekten (103-1, 103-2) in jedem der Schattierungsaufgabenräume (103a, 103b, 103c, 103d) verfolgen (Original: track).

5. Parallelverarbeitungsverfahren nach Anspruch 4, wobei der Master-Engine (103) für die Master-Schattierungsaufgabengruppierung eine interne Raumadresse, zugewiesen zu jedem jeweiligen Schattierungsaufgabenobjekt (103-1, 103-2), unterhält.

6. Parallelverarbeitungsverfahren nach Anspruch 5, wobei ein Schattierungsaufgabenobjekt (103-1, 103-2) in einer Master-Schattierungsaufgabengruppierung Daten mit einem Schattierungsaufgabenobjekt in einer anderen Master-Schattierungsaufgabengruppierung austauschen kann, indem es seine interne Raumadresse, indiziert zu seiner Master-Schattierungsaufgabengruppierung, bereitstellt.

7. Parallelverarbeitungsverfahren nach einem der Ansprüche 1 bis 6, wobei jedes Schattierungsaufgabenobjekt (103-1, 103-2) wenigstens einen "Datenwarten"-Slot für den Rückfluss von Daten, die von einer entsprechenden Lichtquelle in der Szene emittiertes Licht charakterisieren, hat.

8. Parallelverarbeitungsverfahren nach einem der Ansprüche 1 bis 7, wobei die Bildaufbereitungsaufgabe eine Funktion enthält zum Empfangen von Szenendaten für eine "Weltkarte" der Szene, eine Funktion zum Definieren der Szenenobjekte in jedem Einzelbild der Szene, eine Funktion zum Definieren der Pixel eines Objekts in der Szene, die von einem Augenstrahl eines Betrachters der Szene geschnitten werden und eine Funktion zum Miteinanderverfließen der von jeder der Master-Schattierungsaufgabengruppierungen für jeweilige Objekte in dem Einzelbild zurückgeflossenen Schattierungsergebnisse.

## Revendications

1. Procédé de traitement parallèle pour effectuer des tâches d'ombrage d'infographie en parallèle sur une pluralité de processeurs, comprenant les étapes consistant à:
(a) identifier au moins un groupe de tâches d'ombrage élémentaires d'une tâche importante de rendu infographique pour ombrager une trame d'image d'une scène pouvant être regroupées, comme espace de tâche d'ombrage (103a, 103b, 103c, 103d) qui réalise l'ombrage d'un pixel dans la trame d'image de sorte que l'espace de tâche d'ombrage ne dépend pas du message transmis depuis un processus externe afin de compléter le traitement de plusieurs processus de calcul de l'espace de tâche d'ombrage (103a, 103b, 103c, 103d);
(b) décomposer l'espace de tâche d'ombrage (103a, 103b, 103c, 103d) en une pluralité d'objets de tâche d'ombrage autonomes (103-1, 103-2) ,les objets de tâche d'ombrage (103-1, 103-2) comprenant une pluralité d'objets de tâche «d'ombrage de pixel» pour réaliser un ombrage du pixel sur la base de la projection de rayures provenant de sources lumineuses dans la scène, et un objet de tâche "de composition" pour composer les résultats d'ombrage pour le pixel de sorte que chacun des objets de tâche d'ombrage peut être réalisé lors d'une étape de calcul sans exiger le passage du message vers ou à partir d'un autre objet, dans lequel chaque objet de tâche d'ombrage (103-1, 103-2) est défini avec une étape de calcul et au moins un emplacement "d'attente de données" pour la réception des données demandées de la part d'un autre objet de tâche d'ombrage dont l'objet de tâche d'ombrage (103-1, 103-2) transmet un message pour les données demandées, et une fois que tous les emplacements "d'attente de données" d'un objet de tâche d'ombrage sont remplis par un ou plusieurs messages de retour respectifs, l'objet de la tâche d'ombrage (103-1, 103-2) peut effectuer son étape de calcul définie sans attendre une autre saisie;
(c) programmer les objets de tâche d'ombrage définis (103-1, 103-2) dudit espace de tâche d'ombrage identifié (103a, 103b, 103c, 103d) de sorte que chaque objet de tâche d'ombrage (103-1, 103-2) prêt pour le traitement est traitée par un élément « non occupé » disponible parmi la pluralité de processeurs, par la séquence de
(i) placement d'un objet de tâche d'ombrage (103-1, 103-2) avec un emplacement «d'attente de données» non-rempli dans un état « d'attente » dans lequel il n'est pas été attribué à un processeur quelconque;
(ii) modifier le statut d'un objet de tâche d'ombrage (103-1, 103-2) à un état « actif » lorsque tous ses emplacements «d'attente de donnée» défini sont remplis, dans lequel il est assigné à un processeur suivant disponible dans un état « inoccupé », puis placer le statut de ce processeur dans un état «occupé»; et
(iii) modifier l'état de l'objet de la tâche d'ombrage (103-1, 103-2) à un état « mort » lorsque l'étape de calcul à effectuer pour l'objet de la tâche d'ombrage (103-1, 103-2) par l'assigné processeur est terminée, puis changer l'état du processeur vers un état «inoccupé» à assigner à un objet suivant de tâche d'ombrage « active » (103-1, 103-2).

2. Procédé de traitement parallèle selon la revendication 1, dans lequel un groupement pilote de tâches d'ombre est défini par une pluralité d'espaces de tâche d'ombrage (103a, 103b, 103c, 103d), dont chacun contient plusieurs objets de tâche d'ombrage (103-1, 103-2) et ne nécessite pas la transmission de messages à partir d'une source externe afin de compléter le calcul de l'espace de travail d'ombrage respectif (103a, 103b, 103c, 103d).

3. Procédé de traitement parallèle selon la revendication 2, dans lequel tous les objets de tâche d'ombrage (103-1, 103-2) des espaces de travail d'ombrage qui sont dans un état « actif » sont placés dans une file d'attente de traitement et chacun est affecté à son tour à un processeur «inoccupée» disponible suivant.

4. Procédé de traitement parallèle selon la revendication 3, dans lequel un moteur pilote (103) pour le groupement pilote de tâche d'ombrage conserve des fils qui permettent de suivre le traitement des objets de tâche d'ombrage (103-1, 103-2) dans chacun des espaces de tâche d'ombrage (103a , 103b, 103c, 103d).

5. Procédé de traitement parallèle selon la revendication 4, dans lequel le moteur pilote (103) pour le groupement pilote des tâches d'ombrage conserve une adresse de l'espace interne affectée à chaque objet de tâche d'ombrage respectives (103-1, 103-2).

6. Procédé de traitement parallèle selon la revendication 5, dans lequel un objet de tâche d'ombrage (103-1, 103-2) dans un groupe pilote de tâches d'ombrage peut échanger des données avec un objet de tâche d'ombrage dans un autre groupement pilote de tâches d'ombrage en prévoyant son adresse de l'espace interne indexé à son groupement pilote de tâches d'ombrage.

7. Procédé de traitement parallèle selon l'une quelconque des revendications 1 à 6, dans lequel chaque objet de tâche d'ombrage (103-1, 103-2) comporte au moins un emplacement «d'attente de données» pour le retour des données caractérisant la lumière émise par une source de lumière respective dans la scène.

8. Procédé de traitement parallèle selon l'un quelconque des revendications 1 à 7, dans lequel la tâche de rendu comprend une fonction destinée à recevoir des données de scène pour une « carte du monde » de la scène, une fonction permettant de définir les objets de la scène dans chaque trame de la scène, une fonction permettant de définition des pixels d'un objet dans la scène coupée par un rayon de l'oeil d'un observateur de la scène, et une fonction pour collation des résultats d'ombrage renvoyées par chacun des groupes de tâches d'ombrage principale pour les objets respectifs dans la trame d'image.
